# EUROPEAN PATENT SPECIFICATION

(11) **EP 3 205 536 B1**
(45) Date of publication and mention of the grant of the patent: **19.06.2019**
(21) Application number: 16155270.8
(22) Date of filing: 11.02.2016
(51) Int. Cl.: B60R 19/40, B60R 19/54

(54) **ARRANGEMENT AND METHOD FOR OFFSET COLLISION MITIGATION**
ANORDNUNG UND VERFAHREN ZUR ABSCHWÄCHUNG VON OFFSET-KOLLISIONEN
AGENCEMENT ET PROCÉDÉ D'ATTÉNUATION DE COLLISION DÉCALÉE

(43) Date of publication of application: 16.08.2017
(73) Proprietor: Volvo Car Corporation, 40 531 Göteborg (SE)
(72) Inventor: Sandberg, Anders, 43362 Sävedalen (SE)
(74) Representative: Kransell & Wennborg KB

(56) References cited:
- EP-A1- 0 589 227
- US-A1- 2011 172 882
- US-B1- 6 623 054

## Description

### TECHNICAL FIELD

The present disclosure relates to an arrangement and a method for offset collision mitigation of a vehicle. The disclosure further relates to a vehicle comprising such an arrangement.

### BACKGROUND

Unfortunately, vehicles are sometimes involved in collisions. It is therefore well known to provide a vehicle with different components intended to mitigate the consequences of a collision.

Patent document EP0894677A1 discloses a crash bar connected to a fixed support of the vehicle. A fluid-driven turbine is supported on the support to be able to longitudinally displace the crash bar. It uses a hydraulic jack with a fixed end, whose body is connected to a fixed support. Its movable end in the form of a rod connects to the crash bar. The rod is displaceable between first and second positions.

Sometimes the collision is an offset collision. There are standard test methods intended to simulate an offset collision between two similar-sized vehicles with similar crash characteristics. However, in real traffic scenarios, a vehicle may also collide with vehicles having another size and/or crash characteristics. As used herein, the term offset collision is used to denote a collision, in which the two colliding vehicles only partly overlap.

The crash bar suggested by patent document EP0894677A1 will help mitigating the consequences of a frontal impact. However, it is not configured for an offset collision.

Document US 2011/172882 relates to a collision mitigation system for a vehicle having a frame assembly including a pair of frame members extending longitudinally along opposite lateral sides of a vehicle. A bumper beam extends across forward end portions of the pair of frame members. The bumper beam has a curved asymmetrical profile for guiding movement of the vehicle during a front-end offset crash event.

Document EP 0589227 A1 relates to a crash protection device on utility vehicles, having a device which is arranged at the same level as the car bumpers, takes up energy and can also be designed to permit the lateral diversion of cars colliding with the utility vehicle. The device for taking up energy can, when a certain limit speed is exceeded and a higher range of speeds is entered, be automatically extended from an inner position arranged beneath the front of the driver's cab and parallel to the latter to adopt a position which is further forward in the direction of travel, the distance extended being equal to the extent of the permissible deformation zone.

Document US 6,623,054 B1 relates to a device for motor vehicles designed to prevent traffic accidents or to reduce their injurious consequences. The extent of injuries in traffic accidents can be reduced significantly by employing the vehicle bumper as a deformation zone. A sensor is used to record this distance from and speed relative to an obstacle in the direction of travel. When a collision is unavoidable, one end of the bumper is projected outward by a propellant charge so that, together with a strut, if forms a deformation zone ahead of the vehicle. The device can also be provided with a system to warn of dangerous traffic situations, and to brake the vehicle automatically or reduce its speed if the risk of a collision exists. In the case of trucks and buses, the bumper may be deployed by means of a pneumatic cylinder and valve, which are controlled by the vehicle's ordinary speedometer. The bumper remains deployed above a certain threshold speed.

### SUMMARY

The object of the present disclosure is to overcome or ameliorate at least one of the disadvantages of the prior art, or to provide a useful alternative.

The object above may be achieved by the subject-matter of claim 1. Embodiments are set forth in the appended dependent claims, in the following description and in the drawings.

Thus, in a first aspect of the present invention there is provided an arrangement for offset collision mitigation of a vehicle. The arrangement has a length direction, adapted to substantially coincide with one of a longitudinal direction or a transverse direction of the vehicle, and a cross direction, adapted to substantially coincide with the other of the longitudinal direction or transverse direction of the vehicle, the cross direction being perpendicular to the length direction. The arrangement comprises a crash mitigation bar, extending in the length direction of the arrangement in a normal position of the arrangement, at least one connection member connected to the crash mitigation bar and being adapted to connect the crash mitigation bar to a body of the vehicle, and at least one displacement member. The at least one displacement member is adapted to displace the arrangement from the normal position being used during normal usage of the vehicle to an impact position being used in case of an offset collision scenario. In the impact position of the arrangement, the crash mitigation bar provides an angled impact surface.

The length direction of the arrangement may be adapted to substantially coincide with the transverse direction of the vehicle, when the arrangement is in its normal position, and the cross direction may be adapted to substantially coincide with the longitudinal direction of the vehicle. If oriented in this way, the arrangement is suitable for being located at a front end or at a rear end of the vehicle. Often, the highest risk for an offset collision is at the front end of the vehicle, so if the vehicle only comprises one arrangement as described herein, it may preferably be located at the front end of the vehicle.

In addition, or as an alternative, an arrangement as described herein may be located at a lateral side of the vehicle, preferably at least one arrangement at each lateral side. In that case, the length direction of the arrangement coincides with the longitudinal direction of the vehicle and the cross direction of the arrangement coincides with the transverse direction of the vehicle in the normal position of the arrangement.

The crash mitigation bar is adapted to be the first component coming in touch with a possible offset-colliding other vehicle. It may have a length of at least 0,5 metres or at least 1 metre. If the arrangement is adapted to be located at the front or rear end of the vehicle, the crash mitigation bar may have a length, which substantially coincides with the width of the vehicle. If the arrangement is adapted to be located at the lateral side of the vehicle, the crash mitigation bar may have a length which substantially coincides with the length of the vehicle or with the length of the passenger compartment. There may further be more than one arrangement located at a front end, a rear end or a lateral side of the vehicle. Purely as an example, if having two arrangements beside each other at the same end or the same lateral side, the crash mitigation bar may have a length of substantially half the width or length of the vehicle or of the passenger compartment.

The connection members may be fixedly connected to the crash mitigation bar in the vicinity of its ends. The connection members may extend along the cross direction or substantially along the cross direction of the arrangement. Other configurations of the connection members are also feasible, such as link arms pivotally connected to the crash mitigation bar and to the body of the vehicle. There may be one, two, three or more connection members in the arrangement.

In an embodiment with a single connection member, the connection member may comprise, or constitute, a hinge, which pivotally connects the crash mitigation bar to the body of vehicle. In that case the hinge is preferably located at the end of the crash mitigation bar being at the same side of the vehicle as the steering wheel, such that for right-hand traffic the crash mitigation bar may be inclined to the left and vice versa for left-hand traffic. A displacement member may be located at the other end of the crash mitigation bar. It is known that, if driving in right-hand traffic, it is more likely that the oncoming vehicle in an offset collision situation would hit a left-hand portion of the own vehicle and vice versa.

The displacement member/s may extend along the cross direction or substantially along the cross direction of the arrangement. Other configurations of the displacement members are also feasible, such as link arms pivotally connected to the crash mitigation bar and to the body of the vehicle. There may be one, two, three or more displacement members in the arrangement.

If the arrangement comprises a single displacement member, the displacement member is preferably located at the longitudinal centre of the arrangement. The arrangement may alternatively comprise two, three or more displacement members. If having two or more displacement members, two of them may be connected to the crash mitigation bar in the vicinity of its ends. If having three displacement members, there may be two of them connected to the crash mitigation bar in the vicinity of its ends and one connected to the longitudinal centre of the crash mitigation bar.

The displacement member may comprise a piston, a pre-tensioned spring member or an airbag. However, even if the displacement member comprises an airbag, the part of the arrangement adapted to be in contact with an impacting other vehicle is the crash mitigation bar.

The displacement member may comprise a pyrotechnical means adapted to displace the crash mitigation bar from the normal position to the impact position upon activation, or to initiate the displacement.

The normal position of the arrangement is the position of the arrangement during normal usage of the vehicle, e.g. when being driven or being parked. Preferably, the arrangement is then located within the vehicle or at least within its projected area.

In the impact position of the arrangement, the crash mitigation bar provides the angled impact surface. The crash mitigation bar then assumes an angle in relation to the length direction in the normal position of the arrangement. The angled impact surface may result from the displacement member/s and/or the connection member/s having a selectable extension range and/or extension angle and/or deformation resistance. The extension range and/or extension angle and/or deformation resistance may e.g. be set by a safety system of the vehicle, e.g. being adapted to the kind and/or severity of the collision. In addition, the crash mitigation bar may in the impact position provide an extra deformation zone to the vehicle.

An offset collision scenario comprises a situation, where another vehicle may collide with the own vehicle with a partial overlap between the two vehicles. The offset collision may be likely or unavoidable. A safety system of the vehicle may be used to determine the collision. The collision may be imminent, e.g. going to happen in a near future, or the actual impact may already have occurred.

The extension range and/or extension angle and/or deformation resistance may be selectable on an individual level for the individual displacement member/s and/or connection member/s. Thereby the size of the angle α in the impact position may be purposely selected. The extension range and/or extension angle and/or deformation resistance may e.g. be set by a safety system of the vehicle, e.g. being adapted to the kind and/or severity of the collision on the individual level.

As an alternative, or a complement, the angle of the angled impact surface may be fixed in the impact position. For example, if driving in right-hand traffic, it is more likely that the oncoming vehicle in an offset collision situation would hit a left-hand portion of the own vehicle and hence the arrangement may be pre-set to try to guide the oncoming vehicle to the left-hand-side of the own vehicle. The crash mitigation bar could then be inclined to the left. For left-hand traffic, the crash mitigation bar could instead be inclined to the right.

The arrangement may be configured such that it is displaced to the impact position, when the vehicle detects an imminent offset collision, preferably such that the arrangement has reached the impact position, when the impact actually occurs. This may e.g. be the case if the displacement member/s and/or the connection member/s have a selectable extension range and/or extension angle.

As an alternative, or a complement, the crash mitigation bar may assume a deployed position before the actual impact, in which position the crash mitigation bar is displaced from the normal position in a deployment direction having a component substantially coinciding with the cross direction. In the deployed position the crash mitigation bar is displaced in a direction away from the vehicle. The crash mitigation bar may be non-angled in the deployed position, i.e. it has a length direction parallel to that of the normal position. The arrangement may be adapted to be displaced from the deployed position to the impact position providing the angled impact surface. This may be the case when the arrangement is configured to assume the impact position during the impact.

The impact forces may be used to displace, or to contribute to displace, the arrangement to the impact position, e.g. from the deployed position to the impact position or from the normal position to the impact position. The impact forces may e.g. be utilized to displace the arrangement if the displacement member and/or the connection members have a selectable extension angle and/or deformation resistance.

Purely as an example, the arrangement may first be adapted to be displaced to a deployed position, e.g. when the own vehicle determines an imminent offset collision, e.g. by displacing the crash mitigation bar in a direction away from the own vehicle and towards the other vehicle. Then, the crash mitigation bar may be influenced by the impact forces of the collision, such that the crash mitigation bar provides the angled impact surface during the actual collision, although the crash mitigation bar provided a non-angled impact surface in the normal position and in the deployed position.

Due to the angled impact surface, the arrangement may help to make the another vehicle, which might hit in an offset collision if no preventive measures were to be taken, slide on the crash mitigation bar, thereby guiding the other vehicle to the side of the own vehicle. Preferably, the arrangement manages to guide the other vehicle along the own vehicle, i.e. outside of the own vehicle. By utilizing an arrangement as described herein, it is possible to avoid that the vehicles involved in the collision come to a standstill, in which all the kinetic energy of the two vehicles have been absorbed in the impact. Instead, both the own vehicle, and the other vehicle guided to the side, may keep on moving, albeit with lower speeds and in other directions. Thereby only part of the kinetic energy is absorbed in the impact and the consequences for the vehicle occupants are mitigated as compared to if not utilizing the arrangement. To conclude, if utilizing an arrangement as described herein the consequences of an offset collision are mitigated, or preferably, avoided.

In the impact position of the arrangement, at least a portion of the crash mitigation bar assumes an angle α in relation to the length direction in the normal position of the arrangement, the angle α being between 0° and 90°, preferably in the range from 10° to 60°, more preferably in the range from 20° to 50°, most preferably in the range from 30° to 45°. The angles 0° and 90° are not included in the range, since that would correspond to a non-angled crash mitigation bar.

In case the crash mitigation bar is curved when in the impact position, a straight line is drawn between its ends and the angle α is determined as the angle between that line and the length direction in the normal position of the arrangement.

If the crash mitigation bar in the impact position comprises a plurality of straight portions, an angle may be determined for each of the straight portions. The crash mitigation bar may e.g. assume a shape like the stem of a boat. In that case there are two straight portions forming a tip where they meet. The two portions may be individually curved and their angles determined as described above.

A maximal displacement from the normal position to the impact position of the arrangement may be at least 5 cm, preferably at least 15 cm, more preferably at least 25 cm, most preferably at least 35 cm. The crash mitigation bar may e.g. be arranged to be displaced by up to 50 cm or up to 1 metre. A practical upper limit for the maximal displacement may be the width or the length of the vehicle. The maximal displacement is determined as the shortest distance between the portion of the crash mitigation bar being furthest away from the body of the vehicle and the body of the vehicle.

The crash mitigation bar may be adapted to be located in a sill or a bumper of the vehicle when in the normal position. Thereby, the crash mitigation bar may be concealed in the structure of the vehicle, when the arrangement is in its normal position. Hence the crash mitigation bar may be invisible from the outside of the vehicle. Such a configuration may also be advantageous for the aerodynamic properties of the vehicle. Further, there is thereby only a small, a negligible, or even no influence on the vehicle's clearance from the ground. In addition, the crash mitigation bar may be shielded from dirt and moisture.

The arrangement may comprise one or more vertical members connected to the crash mitigation bar. The vertical members extend in a vertical direction being perpendicular to the length direction and the cross direction of the arrangement. In case the arrangement is located at a lateral side of the vehicle, the vertical members may be adapted to fit in a respective pillar of the vehicle. A first vertical member may be adapted to fit in the A-pillar. A second vertical member may be adapted to fit in the B-pillar. If the arrangement comprises a third vertical member, it may be adapted to fit in the C-pillar. Thereby, the arrangement has an extension in the vertical direction which is greater than that of the crash mitigation bar alone. This may prove advantageous if colliding with a vehicle having a different clearance from the ground, as the vertical members may act to compensate for height differences between the colliding vehicles. As mentioned above, the crash mitigation bar may have a length coinciding with that of the passenger compartment, i.e. substantially extending between the A-pillar and the C-pillar.

In addition, or as an alternative, the arrangement may comprise structures located in the door of the vehicle. There may e.g. be a member extending vertically, horizontally or diagonally in the door, which is activated in case of a detected impact or imminent impact and which member may cooperate with other components of the arrangement, e.g. with the crash mitigation bar. Activation of such a member will damage the door, but the door would anyway have been damaged in the collision, if no preventive measures were taken.

At least one of the connection members may be adapted to be located inside or around a bar of the vehicle extending in the other of the longitudinal direction or transverse direction of the vehicle, when the arrangement is in its normal position, the connection member thereby being perpendicular to the length direction of the crash mitigation bar.

In case the arrangement is located at the front end or the rear end of the vehicle, the connection members may be located at a left-hand side bar and a right-hand side bar of the vehicle. In case the arrangement is located at the lateral side of the vehicle, the connection members may be located a front cross bar and a rear cross bar of the vehicle. The connection member may e.g. be located inside the bar, if hollow. Alternatively, the connection member may form a shell at least partly surrounding the bar. When the arrangement is displaced to the impact position, the connection members are in that case displaced in relation to the bar of the vehicle.

The at least one displacement member may be connected to one of the connection members or the at least one displacement member may be comprised in the connection member. They may form an integral unit.

The at least one connection member and/or displacement member may comprise a link arm pivotally connected to the crash mitigation bar and adapted to be pivotally connected to the body of the vehicle. In addition, the link arm may be slidably connected to the crash mitigation bar and/or to the body of the vehicle. The link arm may be connected to the crash mitigation bar in the vicinity of one of its ends. If there are two link arms, they may be arranged to cross each other. The arrangement may be configured such that when the vehicle detects an impact, or an imminent impact, the arrangement is moved to the impact position by pivoting the connection member/s at the end/s at the same time as the end/s connected to the crash mitigation bar move laterally in relation to the crash mitigation bar, e.g. by sliding along or in oblong openings in the crash mitigation bar and/or sliding along or in oblong openings in an element of the vehicle body. The arrangement may be displaced early enough to have reached the impact position already at the time of the impact. As an alternative or a complement, the impact forces may help displacing the arrangement to the impact position. Crossing connection members, as described above, may be combined with one or more connection member extending in the cross direction.

The arrangement may be stabilized by a retaining member in the normal position, such that it is not erroneously displaced to the impact position e.g. by means of wind pressure. The retaining member may be released by the safety system of the vehicle or by forces being above a predefined level, e.g. being exerted by the displacement member.

In a second aspect of the invention, there is provided a vehicle comprising the arrangement as disclosed herein. There may be an arrangement located at the front end, the rear end, the left-hand lateral side and/or the right-hand lateral side of the vehicle. There may be one or more arrangements at each end or side of the vehicle.

The vehicle may further comprise an impact determination means and a controller connected to the at least one displacement member, such that the arrangement is adapted to be displaced to the impact position by the at least one displacement member, when an impact or an imminent impact is detected by the impact determination means. The arrangement may be arranged to have reached the impact position already when the side impact actually occurs. Impact determination means are known to the skilled person. It may e.g. comprise one or more laser sensors, radar sensors, ultrasonic sensors, cameras or IR sensors. The controller and the impact determination means may form parts of a vehicle safety system. The safety system may be adapted to in addition to activating the arrangement as described herein, or as an alternative, brake the vehicle and/or steer around the other vehicle.

### BRIEF DESCRIPTION OF THE DRAWINGS

The present invention will hereinafter be further explained by means of non-limiting examples with reference to the appended drawings wherein:
- Fig. 1: is a schematic view from above of an arrangement for offset collision mitigation according to a first embodiment of the invention in a normal position,
- Fig. 2: illustrates the arrangement of Fig. 1 in an impact position,
- Fig. 3: is a schematic view from above of a second embodiment of the invention,
- Fig. 4: is a schematic view from above of a third embodiment of the invention,
- Fig. 5: illustrates the arrangement of Fig. 4 in an impact position,
- Fig. 6: is a schematic view from the side of an arrangement according to the invention,
- Fig. 7a-d: schematically illustrate a front offset collision scenario,
- Fig. 8a-b: schematically illustrate a side offset collision scenario,
- Fig. 9a-c: schematically illustrate another front offset collision scenario for a vehicle comprising a fourth embodiment of the invention, and
- Fig. 10a-d: schematically illustrate another front offset collision scenario for a vehicle comprising a fifth embodiment of the invention,

It should be noted that the appended drawings are not necessarily drawn to scale and that the dimensions of some features of the present invention may have been exaggerated for the sake of clarity.

### DETAILED DESCRIPTION

The invention will, in the following, be exemplified by embodiments. It should however be realized that the embodiments are included in order to explain principles of the invention and not to limit the scope of the invention, defined by the appended claims. Details from two or more of the embodiments may be combined with each other.

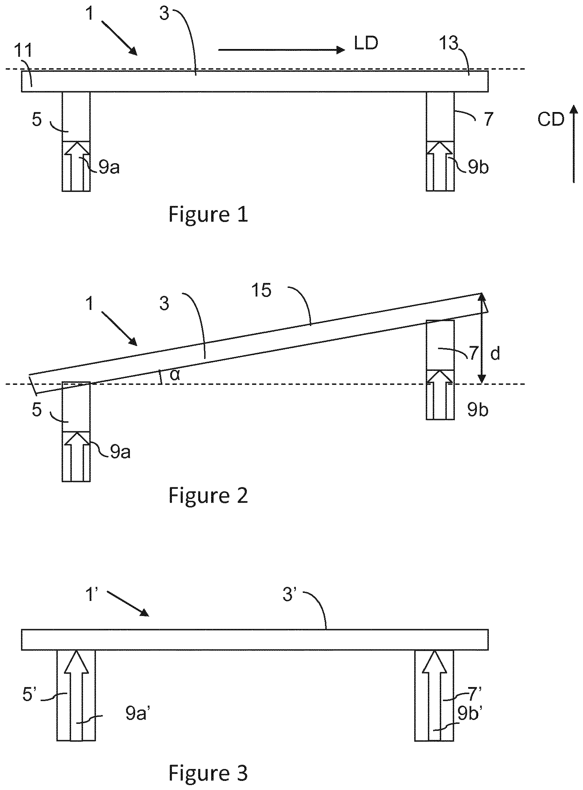

Figures 1 and 2 schematically illustrate an arrangement 1 for offset collision mitigation of a vehicle according to a first embodiment of the invention, as seen from above. Figure 1 illustrates a normal position of the arrangement 1 used during normal usage of the vehicle, e.g. when being driven or being parked. The lateral side edge of the vehicle is indicated by a dashed line. Figure 2 illustrates an impact position, wherein the arrangement 1 provides an angled impact surface 15, which is arranged to mitigate the consequences of an offset collision as is further described below.

The arrangement 1 has a length direction LD adapted to substantially coincide with a transverse direction of the vehicle, when the arrangement 1 is in its normal position, and a cross direction CD adapted to substantially coincide with a longitudinal direction of the vehicle, the cross direction CD being perpendicular to the length direction LD. If oriented in this way, the arrangement 1 is adapted to be located at a front end or a rear end of the vehicle. Often the highest risk for an offset collision is at the front end of the vehicle, so if the vehicle only comprises one arrangement as described herein, it is preferably located at the front end of the vehicle. In addition or as an alternative, an arrangement as described herein may be located at a lateral side of the vehicle, preferably an arrangement at each lateral side. In that case, the length direction LD of the arrangement coincides with the longitudinal direction of the vehicle in the normal position and the cross direction CD of the arrangement coincides with the transverse direction of the vehicle.

In the illustrated embodiment, the arrangement 1 comprises a crash mitigation bar 3 and two connection members 5, 7. The arrangement 1 further comprises two displacement members 9a and 9b, which are connected to the respective connection members 5, 7. The displacement members 9a and 9b are adapted to displace the crash mitigation bar 3 from the normal position, as in Figure 1, to the impact position, as in Figure 2.

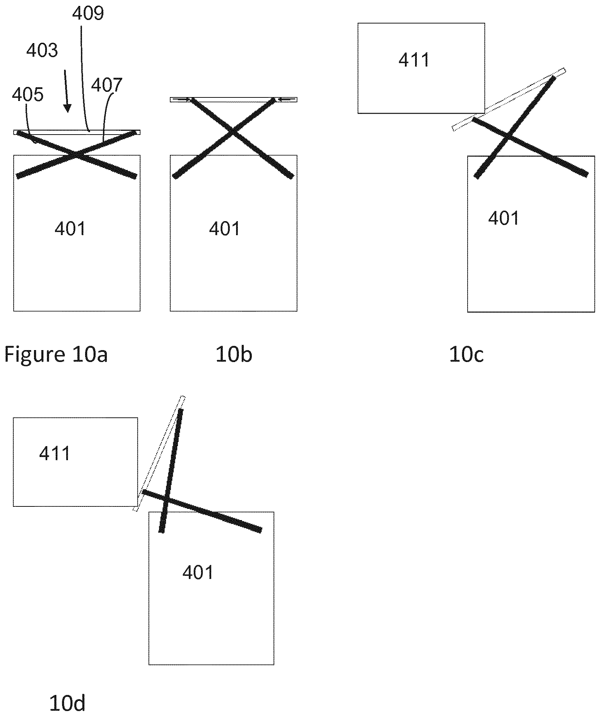

The crash mitigation bar 3 extends with its length axis in the length direction LD. The connection members 5, 7 are adapted to connect the arrangement 1 to a body of the vehicle. In the illustrated embodiment, the connection members 5, 7 are fixedly connected to the crash mitigation bar 3 in the vicinity of its ends 11, 13 and extend along the cross direction CD, but other configurations would also be feasible, such as link arms pivotally connected to the crash mitigation bar 3 and to the body of the vehicle, which is described below in conjunction with Figures 10a-d.

In the normal position, the arrangement 1 is located within the vehicle or at least within its projected area. See Figure 1, wherein the side edge of the vehicle is indicated by the dashed line. The crash mitigation bar 3 may e.g. be located in a bumper or a sill of the vehicle. The bumper is located at the front end or at the rear end of the vehicle. The sill is at least partly located at the lateral side below the doors of the vehicle. Thereby the crash mitigation bar 3 is concealed in the structure of the vehicle, when the arrangement 1 is in its normal position.

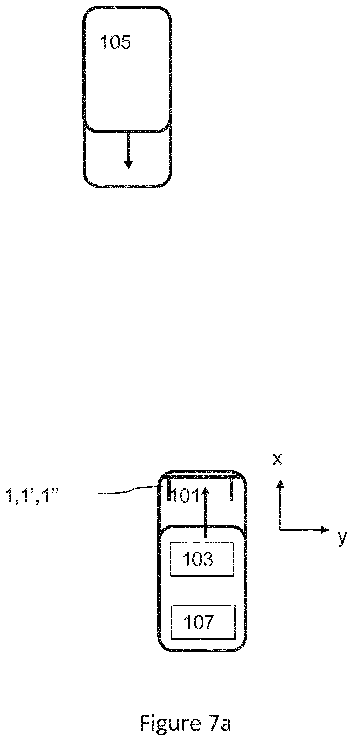

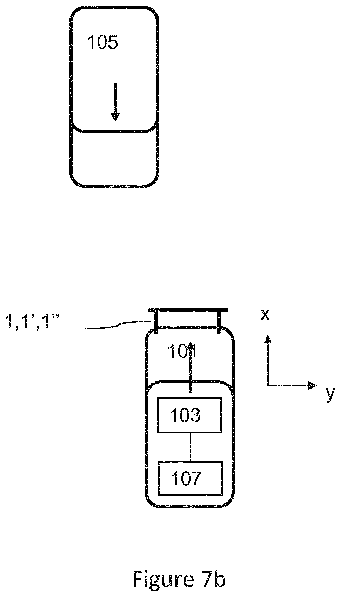

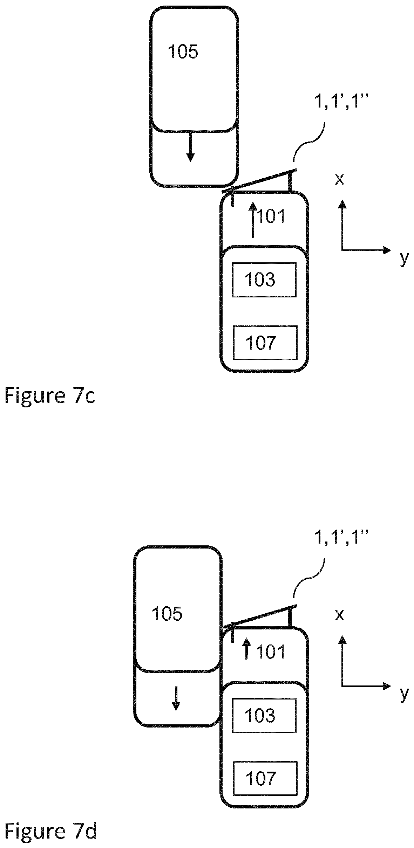

In the impact position, see Figure 2, the crash mitigation bar 3 provides the angled impact surface 15, which is configured to mitigate the consequences of an offset collision with another vehicle by making the other vehicle slide on the crash mitigation bar 3, thereby guiding the other vehicle along the own vehicle instead of actually colliding. This is described below in conjunction with Figures 7-10. In addition, the crash mitigation bar 3 may in the impact position provide an extra deformation zone.

The maximal displacement from the normal position to the impact position of the arrangement 1 may be at least 5 cm, preferably at least 15 cm, more preferably at least 25 cm, most preferably at least 35 cm. The crash mitigation bar 3 may e.g. be displaced by up to 50 cm or up to 1 metre. A practical upper limit for the maximal displacement may be the length or the width of the vehicle. The maximal displacement d is determined as the shortest distance between the point of the crash mitigation bar 3 being furthest away from the body of the vehicle and the body of the vehicle.

In case the arrangement 1 is located at the front end or the rear end of the vehicle, the connection members 5, 7 may be located at a left-hand side bar and a right-hand side bar of the vehicle. In case the arrangement 1 is located at a lateral side of the vehicle, the connection members 5, 7 may be located a front cross bar and a rear cross bar of the vehicle. The connection member 5, 7 may e.g. be located inside the bar, if hollow. Alternatively, the connection member 5, 7 may form a shell at least partly surrounding the bar. When the arrangement 1 is displaced to the impact position, the connection members 5, 7 are displaced in relation to the bar of the vehicle.

The displacement member 9a, 9b may comprise a piston, a pre-tensioned spring member or an airbag. The displacement member 9a, 9b may comprise a pyrotechnical means, not illustrated, adapted to displace the crash mitigation bar 3 from the normal position to the impact position upon activation or to initiate the displacement.

In the impact position, the crash mitigation bar 3 assumes an angle α in relation to the body of the vehicle. See Figure 2. The angle α is determined in relation to the length direction LD in the normal position of the arrangement 1. The angle α is between 0° and 90°, the range not including 0° and 90°, preferably in the range from 10° to 60°, more preferably in the range from 20° to 50°, most preferably in the range from 30° to 45°. The angle α may result from the displacement members 9a, 9b or the connection members 5, 7 having different extension ranges and/or extension angles and/or deformation resistances.

The displacement members 9a, 9b may have an individually selectable extension range and/or extension angle and/or deformation resistance, such that the angle α in the impact position may be purposely selected. The extension range and/or extension angle and/or deformation resistance may e.g. be set by a safety system of the vehicle, e.g. being adapted to the kind and/or severity of the collision.

As an alternative or a complement, the angle α in the impact position may be fixed. For example, if driving in right-hand traffic, it is more likely that the oncoming vehicle in an offset collision situation will hit a left-hand portion of the own vehicle and hence the arrangement 1 may be pre-set to guide the oncoming vehicle to the left-hand-side of the own vehicle. The crash mitigation bar 3 would then be inclined to the left as is illustrated in Figure 2. For left-hand traffic, the crash mitigation bar would instead be inclined to the right.

In a second embodiment of the invention, the arrangement 1' comprises two displacement members 9a' and 9b', which also constitute the connection members 5', 7'. See Figure 3, which is a schematic view seen from above. The two displacement members 9a' and 9b' may e.g. be telescopically expandable pistons. The respective connection member may constitute or comprise the displacement member. They may form an integral unit.

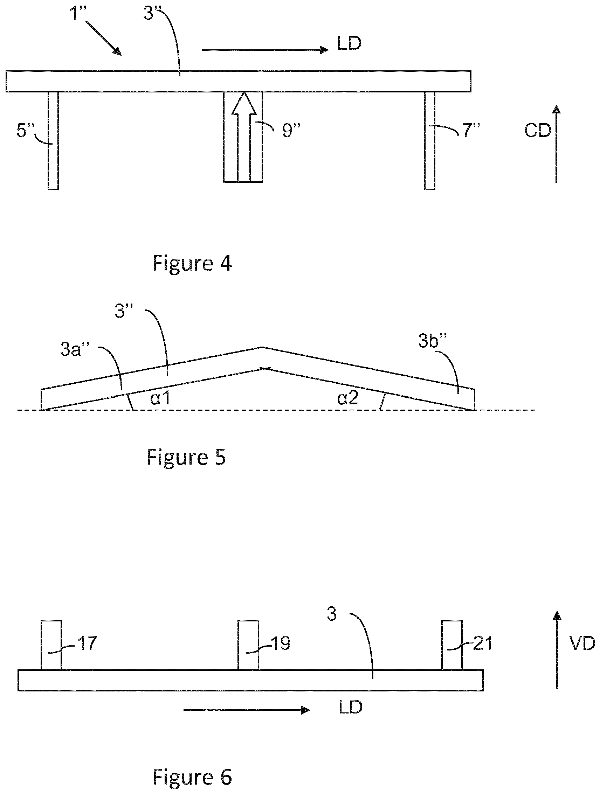

In a third embodiment, see Figures 4 and 5, the arrangement 1" comprises a single displacement member 9", which preferably is located at the longitudinal centre of the arrangement 1". The single displacement member 9" may be arranged to push the centre of the crash mitigation bar 3" forward in case of an expected offset collision, such that the crash mitigation bar 3" forms a shape corresponding to that of a boat stem as illustrated in Figure 5. In that case, a left-hand side 3a" of the crash mitigation bar 3" forms a first angle α1 and a right-hand side 3b" of the crash mitigation bar 3" forms a second angle α2, wherein both the first angle α1 and the second angle α2 preferably lie within the angle ranges given above. The sizes of the first angle α1 and the second angle α2 may be equal or different.

Figure 6 schematically illustrates an arrangement 1, 1', 1" as disclosed herein, e.g. like the ones of Figures 1-5, in case the arrangement 1, 1', 1" is adapted to be located at a lateral side of the vehicle, as seen from the side of the vehicle. The crash mitigation bar 3 extends in the length direction LD. In addition, the arrangement 1 comprises one or more vertical members, in the illustrated embodiment three vertical members 17, 19, 21, connected to the crash mitigation bar 3 and extending in a vertical direction VD, which are adapted to fit in a respective pillar of the vehicle. The vertical direction VD is perpendicular to the length direction LD and the cross direction CD. A first vertical member 17 is adapted to fit in the A-pillar, a second vertical member 19 in the B-pillar and a third vertical member 21 in the C-pillar. Thereby, the arrangement 1 has an extension in the vertical direction VD, which is greater than that of the crash mitigation bar 3 alone. This may prove advantageous if colliding with a vehicle having a different clearance from the ground, as the vertical members 17, 19, 21 may act to compensate for height differences between the colliding vehicles.

Figures 7a-7d schematically illustrate an example of a front offset collision scenario. A first vehicle 101 comprises an arrangement 1, 1', 1" as disclosed herein. The first vehicle 101 has a longitudinal direction x coinciding with its normal driving direction, see arrow in Figure 7a. The first vehicle 101 further has a transverse direction y being perpendicular to the longitudinal direction x. The vehicle 101 also has a vertical direction z being perpendicular to the longitudinal direction x and the transverse direction y, i.e. going out from the plane of the paper. The arrangement 1, 1', 1" is located at a front end of the first vehicle 101, e.g. with the crash mitigation bar concealed in the bumper of the first vehicle 101. In addition, there may be arrangements as described herein located at the rear end, the left-hand lateral side and/or the right-hand lateral side.

As an option, the first vehicle 101 comprises an impact determination means 103, e.g. a sensor such as a laser sensor, a radar sensor, camera sensor or ultrasonic sensor, which is able to detect an imminent collision risk.

In the illustrated offset collision scenario, a second vehicle 105 is moving towards the first vehicle 101 in such a direction and speed, see arrow, that the impact determination means 103 determines that a collision is likely or inevitable. See Figure 7a.

The impact determination means 103 is connected to a controller 107 of a vehicle safety system. The vehicle safety system also comprises the arrangement 1, 1', 1" and the impact determination means 103. When the impact determination means 103 detects the impact, or the imminent impact as in Figure 7a, the arrangement 1, 1', 1" is moved to a deployed position, as illustrated in Figure 7b. In the illustrated embodiment, the arrangement 1, 1', 1" is displaced early enough to already have reached the deployed position at the time of the impact.

In the illustrated example, the controller 107 determines that the second vehicle 105 would hit a left-hand portion of the first vehicle 101 if no preventive measures are taken. Therefore the arrangement 1, 1', 1" is prepared for a left-hand offset collision and the crash mitigation bar 3 is displaced to an impact position having the impact surface inclined to the left. See Figure 2 and Figure 7c. The impact surface 15 may be angled before the impact and/or it may be set up to become angled during the impact, as is illustrated in Figure 7c, e.g. by selecting the deformation resistance of the respective displacement members, e.g. by one of the pistons being stiffer than the other. The impact forces may help to displace the arrangement from the deployed position, see Figure 7b, to the impact position, see Figure 7c.

During the impact of the second vehicle 105 at the front left-hand portion of the first vehicle 101, the arrangement 1, 1', 1" strives to move the second vehicle 105 to the side, such that the second vehicle 105 passes along the lateral side of the first vehicle 101. See Figure 7d. By utilizing an arrangement 1, 1', 1" as described herein, it is possible to avoid that the vehicles 101, 105 involved in the collision come to a standstill, in which all the kinetic energy of the two vehicles 101, 105 have been absorbed in the impact. Instead, both the own vehicle 101, and the other vehicle 105 guided to the side, may keep on moving, albeit with lower speeds and in other directions. Thereby only part of the kinetic energy is absorbed in the impact and the consequences for the vehicle occupants are mitigated as compared to if not utilizing the arrangement 1, 1', 1". Thereby the consequences of the collision are mitigated as compared to a vehicle not having the arrangement 1, 1', 1" as disclosed herein.

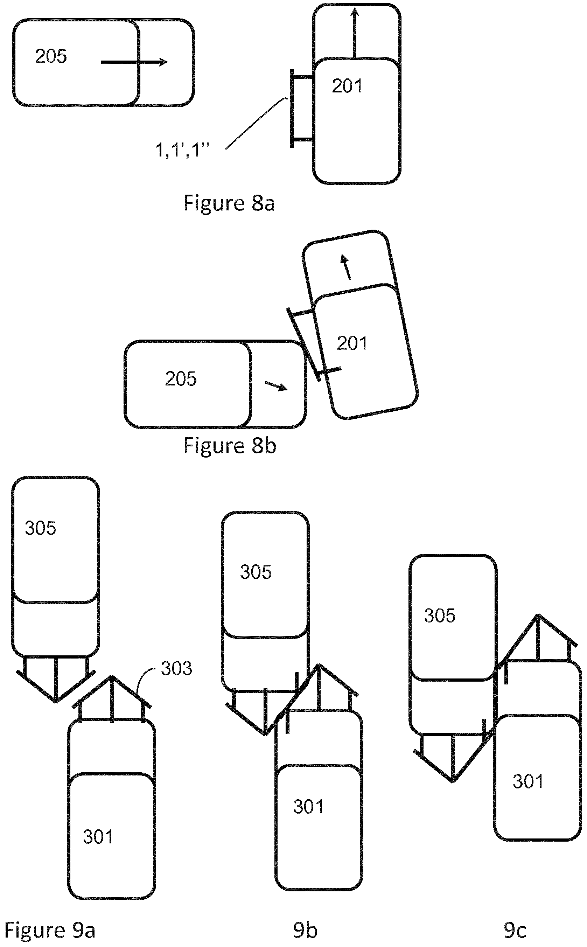

Figures 8a and 8b schematically illustrate an example of an offset collision scenario, when the second vehicle 205 comes from the side. A first vehicle 201 comprises an arrangement 1, 1', 1" as disclosed herein located at a lateral left-hand side of the vehicle, e.g. with the crash mitigation bar concealed in the sill of the first vehicle 201. In addition, there may be arrangements 1, 1', 1" as described herein located at the front end, at the rear end and/or the right-hand lateral side. The first vehicle 201 comprises a vehicle safety system corresponding to that of the first vehicles of Figures 7a-7d. In the illustrated offset side collision scenario, a second vehicle 205 is moving towards the first vehicle 201 in such a direction and speed, see arrow, that the first vehicle 201 determines that a collision is likely or inevitable. As a reaction, the first vehicle displaces the arrangement 1, 1', 1" to the deployed position. See Figure 8a.

When the second vehicle 205 impacts at the side of the first vehicle 201, the arrangement 1, 1', 1" is moved to the impact position, see Figure 8b. The arrangement 1, 1', 1" then strives to move the second vehicle 205 rearwards, such that the second vehicle 205 at least hits the own vehicle 201 behind the passenger compartment. Preferably the second vehicle 205 is made to move behind the own vehicle 201. In addition, the first vehicle 201 changes moving direction due to the impact. By means of the arrangement 1, 1', 1", the consequences of the side offset collision are mitigated as compared to a vehicle not having the arrangement 1, 1', 1" as disclosed herein. Dependent on factors such as the speed of the own vehicle, the speed of the second vehicle, the expected impact point etc., the safety system of the first vehicle 205 may instead determine that it is better to try to move the second vehicle 205 at least forwards of the passenger compartment, or preferably forwards of the first vehicle 201, instead.

Figures 9a-9c schematically illustrate another example of a front offset collision scenario. A first vehicle 301 comprises an arrangement 303 according to a fourth embodiment of the invention located at the front end of the vehicle 301, e.g. with the crash mitigation bar concealed in the bumper of the first vehicle 301. The arrangement 303 comprises three displacement members. A first and a second displacement member are connected to the crash mitigation bar in the vicinity of its ends. In addition there is a third displacement member located at the longitudinal centre of the crash mitigation bar. The third displacement member has a longer extension range than the other two displacement members, such that the crash mitigation bar in the impact position has a shape corresponding to that of a boat stem. See Figure 9a. In addition, there may be arrangements as described herein located at the rear end, the left-hand lateral side and/or the right-hand lateral side. In the illustrated embodiment, the deployed position and the impact positions are the same.

The first vehicle 301 comprises a vehicle safety system corresponding to that of the first vehicles of Figures 7a-7d. In the illustrated offset collision scenario, a second vehicle 305 is moving towards the first vehicle 301 in such a direction and speed, that the first vehicle 301 determines that a collision is likely or inevitable.

When the second vehicle 305 impacts at the front left-hand portion of the first vehicle 301, the arrangement 303 strives to move the second vehicle 305 to the side, such that the second vehicle 305 passes along the lateral side of the first vehicle 301. See Figures 9b and 9c. Thereby the consequences of the collision are mitigated as compared to a vehicle not having the arrangement 303 as disclosed herein.

Figure 10a-10d discloses a vehicle 401 comprising an arrangement 403 according to a fifth embodiment of the invention located at the front end of the vehicle 401, e.g. with the crash mitigation bar concealed in the bumper of the first vehicle 401. The arrangement 403 comprises two connection members 405, 407 also forming the displacement members, which are at one end pivotally connected to the crash mitigation bar 409 in the vicinity of its respective ends. The other ends of the two connection members 405, 407 are pivotally connected to a structure of the vehicle 401, such that the connection members form link arms. In addition the first connection member 405 crosses the second connection member 407. They may e.g. be at slightly different heights. See Figure 10a illustrating the normal position of the arrangement. In addition, there may be arrangements as described herein located at the rear end, the left-hand lateral side and/or the right-hand lateral side.

In Figure 10a, the distance between the crash mitigation bar 409 and the vehicle body is exaggerated. In a real case, the two displacement members 405, 407 may be substantially parallel to the crash mitigation bar 409 in the normal position of the arrangement. Preferably the arrangement is stabilized by a retaining member, not illustrated, in the normal position, such that it is not erroneously displaced to the impact position e.g. by means of wind pressure. The retaining member is released by the safety system or by forces being above a predefined level.

When the vehicle 401 detects an impact, or an imminent impact, the arrangement 403 is displaced to the deployed position. See Figure 10b. Thereby the two displacement members 405, 407 pivot at their ends at the same time as the ends connected to the crash mitigation bar 409 move laterally in relation to the crash mitigation bar 409, e.g. by sliding along the crash mitigation bar 409. Preferably, the arrangement 403 is moved early enough to have reached the deployed position already at the time of the impact.

In the illustrated example, the vehicle 401 determines that a second oncoming vehicle 411 would hit a left-hand portion of the own first vehicle 401 if no preventive measures are taken. Therefore the arrangement 403 is prepared for a left-hand collision and the crash mitigation bar 409 is moved to an impact position having the impact surface inclined to the left. See Figure 10c. The impact surface may be angled before the impact and/or it may be set up to become angled during the impact, as is illustrated in Figures 10a-d.

When the second vehicle 411 impacts at the front left-hand portion of the first vehicle 401, the arrangement 403 strives to move the second vehicle 411 to the side, such that the second vehicle 411 passes along the lateral side of the first vehicle 401. See Figure 10d. In addition the crash mitigation bar 409 is displaced to the left of the vehicle 401 during the impact, which will also help to move the second vehicle 411 away from the own vehicle 401. Thereby the consequences of the collision are mitigated as compared to a vehicle not having the arrangement 403 as disclosed herein. Even if the illustrated embodiment of Figures 10a-10d shows that the two displacement members 405, 407 have a fixed length, it is also feasible that their length may be varied, e.g. being compressed while absorbing impact energy.

The arrangement 403 disclosed in Figures 10a-10d is configured to be angled in the direction of where the greatest force is applied, illustrated as on the left-hand side, such that the crash mitigation bar 409 assumes a desired angle for the impact surface.

Further modifications of the invention within the scope of the appended claims are feasible. As such, the present invention should not be considered as limited by the embodiments and figures described herein. Rather, the full scope of the invention should be determined by the appended claims, with reference to the description and drawings.

## Claims

1. An arrangement (1, 1', 1", 303, 403) for offset collision mitigation of a vehicle (101, 201, 301, 401),
said arrangement (1, 1', 1", 303, 403) having a length direction (LD), adapted to substantially coincide with one of a longitudinal direction (x) or a transverse direction (y) of said vehicle, and a cross direction (CD), adapted to substantially coincide with the other of said longitudinal direction (x) or transverse direction (y) of said vehicle, said cross direction (CD) being perpendicular to said length direction (LD),
said arrangement comprising
- a crash mitigation bar (3, 3', 3", 409), extending in said length direction (LD) of said arrangement in a normal position of said arrangement,
- two connection members (5, 7; 5', 7'; 5", 7"; 405, 407) connected to said crash mitigation bar and being adapted to connect said crash mitigation bar to a body of said vehicle, and
- at least one displacement member (9a, 9b; 9a', 9b'; 9", 405, 407),
said at least one displacement member being adapted to displace said arrangement from said normal position being used during normal usage of said vehicle to an impact position being used in case of an offset collision scenario,
said crash mitigation bar in said impact position of said arrangement providing an angled impact surface (15),
said two connection members (405, 407) comprise each a link arm pivotally connected to the crash mitigation bar (409) and adapted to be pivotally connected to the body of the vehicle (401);
said link arms are connected to said crash mitigation bar (409) in the vicinity of its ends;
wherein, said link arms cross each other.

2. The arrangement (1, 1', 1", 303, 403) according to claim 1, wherein at least a portion of said crash mitigation bar (3, 3', 3", 409) in said impact position of said arrangement assumes an angle (α, α1, α2) in relation to said length direction (LD) in said normal position of said arrangement, said angle (α, α1, α2) being between 0° and 90°, preferably in the range from 10° to 60°, more preferably in the range from 20° to 50°, most preferably in the range from 30° to 45°.

3. The arrangement (1, 1', 1", 403) according to any one of the preceding claims further being adapted to assume a deployed position, in which said crash mitigation bar is displaced from said normal position in a deployment direction having a component substantially coinciding with said cross direction (CD), said arrangement being adapted to be displaced from said deployed position to said impact position providing said angled impact surface (15).

4. The arrangement (1, 1', 1", 303, 403) according to any one of the preceding claims, wherein said crash mitigation bar (3, 3', 3", 409) is adapted to be located in a sill or a bumper of said vehicle (101, 201, 301, 401) when in said normal position of the arrangement.

5. The arrangement (1, 1', 1 ", 303, 403) according to any one of the preceding claims, wherein at least one of said connection members (5, 7; 5', 7'; 5", 7"; 405, 407), when said arrangement (1, 1', 1", 303, 403) is in its normal position, is adapted to be located inside or around a bar of said vehicle (101, 201, 301, 401), said bar extending in said other of said longitudinal direction or transverse direction of said vehicle (101, 201, 301, 401).

6. The arrangement (1, 1', 1", 303, 403) according to any one of the preceding claims, wherein said at least one displacement member (9a, 9b) is connected to one of said connection members (5, 7) or said at least one displacement member (9a', 9b', 405, 407) is comprised in said connection member (5', 7', 405, 407).

7. The arrangement (1, 1', 1 ", 303, 403) according to any one of the preceding claims, wherein said displacement member (9a, 9b; 9a', 9b'; 9", 405, 407) and/or connection members (5, 7; 5', 7'; 5", 7"; 405, 407) has/have a selectable extension range and/or extension angle and/or deformation resistance.

8. The arrangement (1, 1', 1", 303, 403) according to claim 7, wherein said extension range and/or extension angle and/or deformation resistance is/are selectable on an individual level for said at least one connection member (5, 7; 5', 7'; 5", 7"; 405, 407).

9. A vehicle (101, 201, 301, 401) comprising an arrangement (1, 1', 1", 303, 403) according to any one of the preceding claims.

10. The vehicle (101, 201, 301, 401) according to claim 9 further comprising an impact determination means (103) and a controller (107) connected to said at least one displacement member (9a, 9b; 9a', 9b'; 9", 405, 407), such that said arrangement (1, 1', 1", 303, 403) is adapted to be displaced to said impact position by said at least one displacement member (9a, 9b; 9a', 9b'; 9", 405, 407), when an impact or an imminent impact is detected by said impact determination means.

## Patentansprüche

1. Anordnung (1, 1', 1", 303, 403) zur Abschwächung von Offset-Kollisionen eines Fahrzeugs (101, 201, 301, 401),
wobei die Anordnung (1, 1', 1", 303, 403) Folgendes aufweist: eine Längenrichtung (Length Direction, LD), die dazu ausgelegt ist, mit einer von einer longitudinalen Richtung (x) oder einer transversalen Richtung (y) des Fahrzeugs im Wesentlichen zusammenzufallen, und eine Querrichtung (Cross Direction, CD), die dazu ausgelegt ist, mit der anderen von der longitudinalen Richtung (x) oder der transversalen Richtung (y) des Fahrzeugs im Wesentlichen zusammenzufallen, wobei die Querrichtung (CD) senkrecht zu der Längenrichtung (LD) ist,
wobei die Anordnung Folgendes umfasst:
- eine Stoßabschwächungsstange (3, 3', 3", 409), die sich in der Längenrichtung (LD) der Anordnung in einer normalen Position der Anordnung erstreckt,
- zwei Verbindungselemente (5, 7; 5', 7'; 5", 7"; 405, 407), verbunden mit der Stoßabschwächungsstange und dazu ausgelegt, die Stoßabschwächungsstange mit einer Karosserie des Fahrzeugs zu verbinden, und
- mindestens ein Verlagerungselement (9a, 9b; 9a', 9b'; 9", 405, 407),
wobei das mindestens eine Verlagerungselement dazu ausgelegt ist, die Anordnung von der Normalposition, die während der normalen Nutzung des Fahrzeugs genutzt wird, in eine Aufprallposition zu verlagern, die im Fall eines Offset-Kollisionsszenarios genutzt wird,
wobei die Stoßabschwächungsstange in der Aufprallposition der Anordnung eine abgewinkelte Aufpralloberfläche (15) bereitstellt,
wobei die zwei Verbindungselemente (405, 407) jeweils einen Verbindungsarm umfassen, der drehbar mit der Stoßabschwächungsstange (409) verbunden und dazu ausgelegt ist, drehbar mit der Karosserie des Fahrzeugs (401) verbunden zu sein;
wobei die Verbindungsarme in der Nähe ihrer Enden mit der Stoßabschwächungsstange (409) verbunden sind;
wobei die Verbindungsarme einander kreuzen.

2. Anordnung (1, 1', 1", 303, 403) nach Anspruch 1, wobei mindestens ein Abschnitt der Stoßabschwächungsstange (3, 3', 3", 409) in der Aufprallposition der Anordnung in Bezug auf die Längenrichtung (LD) in der Normalposition der Anordnung einen Winkel (α, α1, α2) annimmt, wobei der Winkel (α, α1, α2) zwischen 0° und 90° groß ist, vorzugsweise im Bereich zwischen 10° und 60°, stärker zu bevorzugen im Bereich zwischen 20° und 50°, am stärksten zu bevorzugen im Bereich zwischen 30° und 45°.

3. Anordnung (1, 1', 1", 403) nach einem der vorangehenden Ansprüche, ferner dazu ausgelegt, eine ausgelöste Position einzunehmen, in welcher die Stoßabschwächungsstange von der normalen Position in eine Auslösungsrichtung versetzt wird, aufweisend eine Komponente, die mit der Querrichtung (CD) im Wesentlichen zusammenfällt, wobei die Anordnung dazu ausgelegt ist, von der ausgelösten Position in die Aufprallposition versetzt zu werden, die abgewinkelte Aufpralloberfläche (15) bereitstellend.

4. Anordnung (1, 1', 1", 303, 403) nach einem der vorangehenden Ansprüche, wobei die Stoßabschwächungsstange (3, 3', 3", 409) dazu ausgelegt ist, in einem Schweller oder einem Stoßfänger des Fahrzeugs (101, 201, 301, 401) positioniert zu sein, wenn sie sich in der Normalposition der Anordnung befindet.

5. Anordnung (1, 1', 1", 303, 403) nach einem der vorangehenden Ansprüche, wobei mindestens eines der Verbindungselemente (5, 7; 5', 7'; 5", 7"; 405, 407) dann, wenn sich die Anordnung (1, 1', 1", 303, 403) in ihrer Normalposition befindet, dazu ausgelegt ist, sich im Inneren einer Stange oder rings um eine Stange des Fahrzeugs (101, 201, 301, 401) zu befinden, wobei sich die Stange in der anderen von longitudinaler Richtung oder transversaler Richtung des Fahrzeugs (101, 201, 301, 401) erstreckt.

6. Anordnung (1, 1', 1", 303, 403) nach einem der vorangehenden Ansprüche, wobei das mindestens eine Verlagerungselement (9a, 9b) mit einem der Verbindungselemente (5, 7) verbunden ist oder mindestens ein Verlagerungselement (9a', 9b', 405, 407) in dem Verbindungselement (5', 7', 405, 407) enthalten ist.

7. Anordnung (1, 1', 1", 303, 403) nach einem der vorangehenden Ansprüche, wobei das Verlagerungselement (9a, 9b; 9a', 9b'; 9", 405, 407) und/oder Verbindungselemente (5, 7; 5', 7'; 5", 7"; 405, 407) einen auswählbaren Ausdehnungsbereich und/oder Ausdehnungswinkel und/oder Verformungswiderstand aufweist/aufweisen.

8. Anordnung (1, 1', 1", 303, 403) nach Anspruch 7, wobei der Ausdehnungsbereich und/oder Ausdehnungswinkel und/oder Verformungswiderstand auf einer individuellen Ebene für mindestens ein Verbindungselement (5, 7; 5', 7'; 5", 7"; 405, 407) auswählbar ist/sind.

9. Fahrzeug (101, 201, 301, 401), das eine Anordnung (1, 1', 1", 303, 403) nach einem der vorangehenden Ansprüche umfasst.

10. Fahrzeug (101, 201, 301, 401) nach Anspruch 9, das ferner ein Aufprallerkennungsmittel (103) und eine Steuerung (107) umfasst, verbunden mit dem mindestens einen Verlagerungselement (9a, 9b; 9a', 9b'; 9", 405, 407), sodass die Anordnung (1, 1', 1", 303, 403) dazu ausgelegt ist, von dem mindestens einen Verlagerungselement (9a, 9b; 9a', 9b'; 9", 405, 407) in die Aufprallposition verlagert zu werden, wenn von dem Aufprallerkennungsmittel ein Aufprall oder ein bevorstehender Aufprall erkannt wird.

## Revendications

1. Agencement (1, 1', 1", 303, 403) pour l'atténuation de collision décalée d'un véhicule (101, 201, 301, 401),
ledit agencement (1, 1', 1", 303, 403) ayant un sens de la longueur (LD) adapté de façon à coïncider essentiellement avec soit un sens longitudinal (x), soit un sens transversal (y) dudit véhicule, et un sens travers (CD), adapté de façon à coïncider essentiellement avec l'autre que ledit sens longitudinal (x) ou ledit sens transversal (y) dudit véhicule, ledit sens travers (CD) étant perpendiculaire audit sens de la longueur (LD),
ledit agencement comprenant :
- une barre d'atténuation de crash (3, 3', 3", 409), s'étendant dans ledit sens de la longueur (LD) dudit agencement dans une position normale dudit agencement,
- deux éléments de liaison (5, 7 ; 5', 7' ; 5", 7" ; 405, 407) reliés à ladite barre d'atténuation de crash et étant adaptés de façon à relier ladite barre d'atténuation de crash à une caisse dudit véhicule, et
- au moins un élément de déplacement (9a, 9b ; 9a', 9b' ; 9", 405, 407), ledit au moins un élément de déplacement étant adapté de façon à déplacer ledit agencement de ladite position normale étant utilisée pendant l'utilisation normale dudit véhicule dans une position d'impact étant utilisée dans le cas d'un scénario de collision décalée,
ladite barre d'atténuation de crash dans ladite position d'impact dudit agencement fournissant une surface d'impact angulaire (15),
lesdits deux éléments de liaison (405, 407) comprenant chacun un bras de liaison relié de manière pivotante à la barre d'atténuation de crash (409) et étant adaptés de façon à être reliés de façon pivotante à la caisse du véhicule (401) ;
lesdits bras de liaison étant reliés à ladite barre d'atténuation de crash (409) près de leurs extrémités ;
lesdits bras de liaison se croisant.

2. Agencement (1, 1', 1", 303, 403) selon la revendication 1, dans lequel au moins une partie de ladite barre d'atténuation de crash (3, 3', 3", 409) dans ladite position d'impact dudit agencement prend un angle (α, α1, α2) par rapport audit sens de la longueur (LD) dans ladite position normale dudit agencement, ledit angle (α, α1, α2) étant entre 0° et 90°, de préférence situé dans la plage allant de 10° à 60°, encore mieux dans la plage allant de 20° à 50°, idéalement dans la plage allant de 30° à 45°.

3. Agencement (1, 1', 1", 403) selon l'une quelconque des revendications précédentes, étant adapté en outre de façon à prendre une position déployée, dans laquelle ladite barre d'atténuation de crash est déplacée de ladite position normale dans un sens de déploiement ayant une composante coïncidant essentiellement avec ledit sens travers (CD), ledit agencement étant adapté de façon à être déplacé de ladite position déployée dans ladite position d'impact fournissant ladite surface d'impact angulaire (15).

4. Agencement (1, 1', 1", 303, 403) selon l'une quelconque des revendications précédentes, dans lequel ladite barre d'atténuation de crash (3, 3', 3", 409) est adaptée de façon à être située dans un bas de caisse ou un parechoc dudit véhicule (101, 201, 301, 401) lorsque l'agencement est dans ladite position normale.

5. Agencement (1, 1', 1", 303, 403) selon l'une quelconque des revendications précédentes, dans lequel au moins un desdits éléments de liaison (5, 7 ; 5', 7' ; 5", 7" ; 405, 407), lorsque ledit agencement (1, 1', 1", 303, 403) est dans sa position normale, est adapté de façon à être situé à l'intérieur ou autour d'une barre dudit véhicule (101, 201, 301, 401), ladite barre s'étendant dans ledit autre sens que ledit sens longitudinal ou ledit sens transversal dudit véhicule (101, 201, 301, 401).

6. Agencement (1, 1', 1", 303, 403) selon l'une quelconque des revendications précédentes, dans lequel ledit au moins un élément de déplacement (9a, 9b) est relié à un desdits éléments de liaison (5, 7) ou ledit au moins un élément de déplacement (9a', 9b', 405, 407) est compris dans ledit élément de liaison (5', 7', 405, 407).

7. Agencement (1, 1', 1", 303, 403) selon l'une quelconque des revendications précédentes, dans lequel ledit élément de déplacement (9a, 9b ; 9a', 9b' ; 9", 405, 407) et/ou lesdits éléments de liaison (5, 7 ; 5', 7' ; 5", 7" ; 405, 407) ont une plage d'extension et/ou un angle d'extension et/ou une résistance à la déformation pouvant être sélectionnés.

8. Agencement (1, 1', 1", 303, 403) selon la revendication 7, dans lequel ladite plage d'extension et/ou ledit angle d'extension et/ou ladite résistance à la déformation peuvent être sélectionnés sur un niveau individuel pour ledit au moins un élément de liaison (5, 7 ; 5', 7' ; 5", 7" ; 405, 407).

9. Véhicule (101, 201, 301, 401) comportant un agencement (1, 1', 1", 303, 403) selon l'une quelconque des revendications précédentes.

10. Véhicule (101, 201, 301, 401) selon la revendication 9, comprenant en outre un moyen de détermination d'impact (103) et un agencement de commande (9a, 9b ; 9a', 9b' ; 9", 405, 407), de manière à ce que ledit agencement (1, 1', 1", 303, 403) soit adapté de façon à être déplacé dans ladite position d'impact par ledit au moins un élément de déplacement (9a, 9b ; 9a', 9b' ; 9", 405, 407), lorsqu'un impact ou un impact imminent est détecté par ledit moyen de détermination d'impact.
